(19)

Europäisches
Patentamt
European
Patent Office
Office européen
des brevets

(11) **EP 4 378 741 A2**

(12) **EUROPEAN PATENT APPLICATION**

(43) Date of publication:
**05.06.2024 Bulletin 2024/23**

(21) Application number: **23219495.1**

(22) Date of filing: **21.12.2023**

(51) International Patent Classification (IPC):
***B60L 15/20*** $^{(2006.01)}$

(52) Cooperative Patent Classification (CPC):
**B60L 15/20; G06F 8/65;** B60L 2240/12;
B60L 2240/421; B60L 2240/461; Y02T 10/72

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2023 CN 202310275200**

(71) Applicant: **XPT EDS (Hefei) Co., Ltd.
Hefei City, Anhui 230601 (CN)**

(72) Inventors:
• **HU, Leli
Hefei City, 230601 (CN)**
• **LIU, Chang
Hefei City, 230601 (CN)**

(74) Representative: **EIP
Fairfax House
15 Fulwood Place
London WC1V 6HU (GB)**

(54) **SELF-UPDATING SYSTEM, VEHICLE, AND SELF-UPDATING METHOD**

(57) The disclosure provides a self-updating system, a vehicle, and a self-updating method. The self-updating system (1) is configured for coefficients having a fixed functional relationship. The self-updating system (1) includes: a first low-pass filter (11) whose input is a first coefficient and whose output is a second coefficient; a hysteresis controller (12) whose input is the second coefficient and whose output is a third coefficient, the hysteresis controller (12) being configured to limit a value of the second coefficient; and a second low-pass filter (13) whose input is the third coefficient and whose output is a fourth coefficient, the fourth coefficient being able to be used to update the first coefficient, so as to be used in coefficient self-updating of the self-updating system (1).

FIG. 1

**Description**

**TECHNICAL FIELD**

The disclosure relates to the field of self-updating of coefficients, and specifically, to a self-updating system, a vehicle, and a self-updating method.

**BACKGROUND**

In recent years, the trend of vehicle electrification is still making progress, and active damping control methods related to the driveability of electric vehicles have begun to attract widespread attention. In active damping control, a wheel speed conversion coefficient is a key technical parameter, which is used to represent a conversion relationship between a motor speed and a wheel speed. The wheel speed conversion coefficient is related to a transmission ratio of a transmission system and the resolution of a signal, and depending on different algorithms, may also be related to a method for generating a wheel speed signal or a dynamic rolling radius of a tire. The wheel speed conversion coefficient is generally set to a fixed calibration amount, which can meet requirements of most scenarios. This results in a self-updating method for the wheel speed conversion coefficient that has not yet been reported.

As competition in the electric vehicle market intensifies, vehicles are required to have more excellent active damping control effects. Due to inevitable differences between vehicles, especially differences in states and parameters of a transmission system of each vehicle, the same calibration amount cannot achieve the optimal control of each vehicle. If the wheel speed conversion coefficient is set as a fixed calibration amount, it cannot be ensured that a rotational speed jitter suppression effect of each vehicle is the optimal. In addition, software upgrades and hardware changes may change a conversion relationship between a wheel speed signal and a motor speed signal, which may have a negative impact on active damping control. Therefore, it is imperative to study and apply a self-updating method for a wheel speed conversion coefficient. The wheel speed conversion coefficient may be directly converted from a motor speed and a wheel speed, but due to the existence of a gear clearance and a shafting torsion angle, the converted wheel speed conversion coefficient has large fluctuations and cannot be used for active damping control. Parameter identification methods can provide beneficial references for the estimation of the wheel speed conversion coefficient, with the observer algorithm being the main representative. The prior art has disclosed a method for estimating a roll angle and a pitch angle of a vehicle based on recursive least-squares, in which a vehicle dynamics model that conforms to traveling characteristics of the vehicle is established, and the estimation of the heading angle and the pitch angle of the vehicle is implemented through the recursive least squares method with a forgetting factor, which requires only low-cost in-vehicle sensors. The prior art has also proposed a method for estimating a road adhesion coefficient of a vehicle based on Kalman filtering and the least square method, in which the tire force generated during vehicle traveling is estimated based on the vehicle dynamics model by using the Kalman filtering, and the road adhesion coefficient is estimated by using the least square method. In addition, there are observers based on SMO, Luenberger, NLLS, NT and other methods that also have good estimation effects, which will not be described again here.

The observers based on methods such as Kalman filtering and least squares can achieve good estimation effects, but still have large estimation errors, require complex calculations, and occupy too much memory.

**SUMMARY**

An objective of the disclosure is to propose a new self-updating method for coefficients, especially a wheel speed conversion coefficient, which requires simple calculations, occupies little memory, and can ensure small estimation errors.

In addition, the disclosure also aims to solve or alleviate other technical problems existing in the prior art.

The disclosure solves the above problems by providing a self-updating system, a vehicle, and a self-updating method. Specifically, according to an aspect of the disclosure, there is provided:

a self-updating system for coefficients having a fixed functional relationship, where the self-updating system includes:

a first low-pass filter whose input is a first coefficient and whose output is a second coefficient;
a hysteresis controller whose input is the second coefficient and whose output is a third coefficient, the hysteresis controller being configured to limit a value of the second coefficient; and
a second low-pass filter whose input is the third coefficient and whose output is a fourth coefficient, the fourth coefficient being able to be used to update the first coefficient, so as to be used in coefficient self-updating of the self-updating system.

Optionally, according to an implementation of the disclosure, the self-updating system is configured for self-updating of a wheel speed conversion coefficient of a vehicle, the wheel speed conversion coefficient represents a conversion relationship between a motor speed and a wheel speed, the first coefficient is also able to be self-updated based on the motor speed and the wheel speed, and the fourth coefficient is used for active damping control of the vehicle.

Optionally, according to an implementation of the disclosure, the self-updating system further includes a coefficient calculation module and a working condition determining module, the working condition determining module determines, based on an actual motor torque, the motor speed, the wheel speed, or the first coefficient, whether a current driving condition of the vehicle is valid, and outputs a determining result to the coefficient calculation module; and when the current driving condition is valid, the coefficient calculation module updates the first coefficient based on the motor speed and the wheel speed, or when the current driving condition is invalid, the coefficient calculation module updates the first coefficient with the fourth coefficient.

Optionally, according to an implementation of the disclosure, the working condition determining module determines, based on a motor deceleration, a motor acceleration, the motor speed, a wheel speed deceleration change amount, the wheel speed, an absolute value of an actual motor torque, and a change rate of the first coefficient, whether the current driving condition is valid.

Optionally, according to an implementation of the disclosure, the first coefficient is able to be updated by using the following formula:

$$\text{First coefficient} = \frac{\text{Motor speed} * 2 * \pi * \text{Resolution of a wheel speed signal}}{60 * \text{Wheel speed}},$$

where the motor speed is in the unit of rpm, the wheel speed is in the unit of km/h, and the resolution of a wheel speed signal is in the unit of (km/h)/bit.

Optionally, according to an implementation of the disclosure, the hysteresis controller determines, based on a hysteresis upper limit value, a hysteresis lower limit value, and a theoretical value of the second coefficient, whether it is necessary to perform hysteresis control on the second coefficient, and if necessary, the hysteresis controller sets a hysteresis start flag to 1, otherwise it sets the flag to 0, and outputs the third coefficient accordingly.

Optionally, according to an implementation of the disclosure, when the self-updating system is started, an initial value of the hysteresis start flag is 1, and the hysteresis controller is configured to:

maintain the hysteresis start flag at 1 when an absolute value of a difference between the second coefficient and the theoretical value is greater than the hysteresis upper limit value, otherwise, further

set the hysteresis start flag to 0 when the absolute value of the difference between the second coefficient and the theoretical value is less than the hysteresis lower limit value, otherwise, still further

maintain the hysteresis start flag at 1 when the absolute value of the difference between the second coefficient and the theoretical value is greater than the hysteresis lower limit value and the hysteresis start flag is 1, otherwise set the hysteresis start flag to 0.

Optionally, according to an implementation of the disclosure, the hysteresis controller is configured to: if the hysteresis start flag is 1, assign the third coefficient as a value to a third coefficient in a previous nth period, and if the hysteresis start flag in a next period is still 1, maintain the third coefficient; or if the hysteresis start flag is 0, assign the third coefficient as a value to the second coefficient, where n is a positive integer.

Optionally, according to an implementation of the disclosure, the self-updating system further includes a write-in determining module and a memory, the write-in determining module is configured to write the fourth coefficient into the memory, and the first low-pass filter, the hysteresis controller, and the second low-pass filter are able to read the fourth coefficient stored in the memory.

Optionally, according to an implementation of the disclosure, if the memory detects, after the self-updating system is started, that a data value of the fourth coefficient is 0, the value is reset to a theoretical value of the fourth coefficient; and/or

if the write-in determining module detects that the fourth coefficient is less than 0, a turn-off write-in flag is set to 0, otherwise the flag is set to 1; and when the self-updating system is turned off, if the turn-off write-in flag is 1, the write-in determining module writes a current fourth coefficient into the memory.

According to another aspect of the disclosure, the disclosure provides a vehicle, having the self-updating system in any one of the above.

According to another aspect of the disclosure, the disclosure provides a self-updating method for coefficients having a fixed functional relationship, where the self-updating method is performed by the self-updating system in any one of the above, and the self-updating method includes the following steps:

S 1: inputting the first coefficient into the first low-pass filter, and obtaining the second coefficient;
S2: inputting the second coefficient into the hysteresis controller, and obtaining the third coefficient, the hysteresis controller being configured to limit a value of the second coefficient; and

S3: inputting the third coefficient into the second low-pass filter, and obtaining the fourth coefficient, the fourth coefficient being able to be used to update the first coefficient, so as to be used in coefficient self-updating of the self-updating method.

The self-updating system, the vehicle, and the self-updating method that are provided have the benefits including: real-time updating; simple calculations and small calculation amount; low memory usage; small estimation errors; being able to perform targeted optimal control for each vehicle; being able to prevent an active damping control effect from deteriorating due to updates or changes in software and hardware; and improved active damping control effects.

## BRIEF DESCRIPTION OF DRAWINGS

The above and other features of the disclosure will become apparent with reference to the accompany drawings, in which:

FIG. 1 is a schematic diagram of modules of a self-updating system according to the disclosure;
FIG. 2 is a diagram of a filtering effect of a first low-pass filter according to the disclosure;
FIG. 3 is a diagram of a hysteresis control effect of a hysteresis controller according to the disclosure;
FIG. 4 is a diagram of a filtering effect of a second low-pass filter according to the disclosure; and
FIG. 5 is a flowchart of a self-updating method according to the disclosure.

## DESCRIPTION OF EMBODIMENTS

It can be readily understood that according to the technical solution of the disclosure, a person of ordinary skill in the art may propose multiple interchangeable structures and implementations without changing the essential spirit of the disclosure. Therefore, the following specific embodiments and the accompanying drawings are merely exemplary descriptions of the technical solutions of the disclosure, and should not be construed as the entirety of the disclosure or construed as limiting the technical solution of the disclosure.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

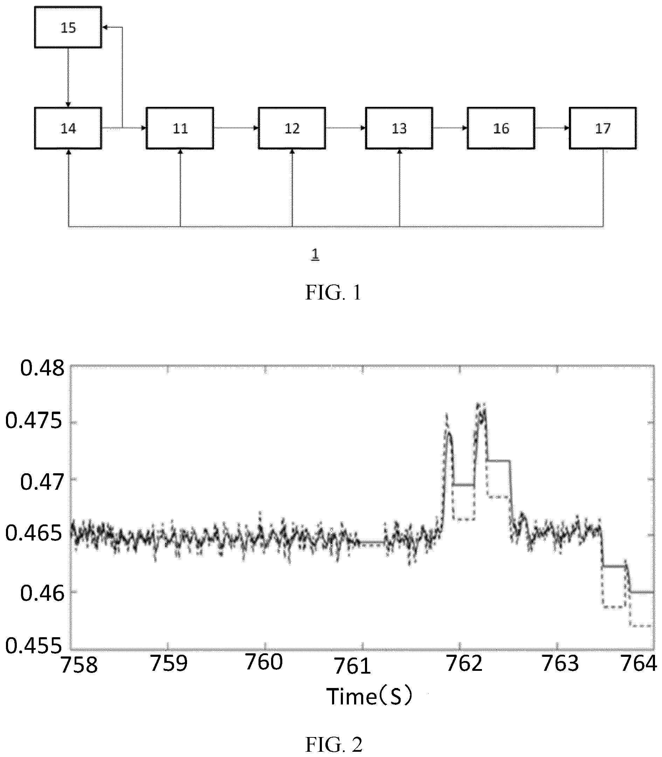

FIG. 1 is a schematic diagram of modules of a self-updating system according to the disclosure.

It should be understood that since specific shapes and connection methods of components are not the subject of the disclosure, for the sake of clarity and conciseness, all these components are schematically given in the form of structural modules. Those skilled in the art can select appropriate module shapes and connection methods in light of the structural diagrams. In addition, the given structural diagrams are an embodiment of the disclosure. Those skilled in the art can make various modifications without departing from the spirit of the disclosure after referring to the diagrams, and these modifications should also be within the scope of protection of the disclosure.

The self-updating system 1 is configured for coefficients having a fixed functional relationship. The self-updating system 1 includes:

a first low-pass filter 11 whose input is a first coefficient and whose output is a second coefficient;
a hysteresis controller 12 whose input is the second coefficient and whose output is a third coefficient, the hysteresis controller 12 being configured to limit a value of the second coefficient; and
a second low-pass filter 13 whose input is the third coefficient and whose output is a fourth coefficient, the fourth coefficient being able to be used to update the first coefficient, so as to be used in coefficient self-updating of the self-updating system 1.

It should be understood that the fixed functional relationship means that an output quantity, an input quantity, and a quantity to be observed (that is, the coefficients referred to herein) can be described by a fixed functional relational expression, such as a functional relational expression $y = ax$, where $y$ is the output quantity, $x$ is the input quantity, and $a$ is the quantity to be observed. Certainly, the form of the functional relational expression is not limited to this, and may include other forms such as a quadratic equation with one unknown. The first coefficient may be preset either by humans using experience or by using a calculation formula (which will be described below) of a theoretical value of the coefficient, and subjected to filtering processing by the two low-pass filters and the hysteresis controller, and the finally obtained fourth coefficient can be used in a subsequent coefficient self-updating process. In addition, those skilled in the art should also understand that the "coefficient" in the subject words is a general term or collective term, and the "first coefficient", "second coefficient", etc. in the specific technical solutions are specific terms and specific implementation forms under the general term. The coefficient self-updating of the self-updating system 1 is finally implemented by updating the first coefficient.

It can be learned from the above technical solutions that using the low-pass filters allows signals below the cut-off frequency to pass, but does not allow signals above the cut-off frequency to pass, thereby implementing smooth processing of input signals. The hysteresis controller is used to limit the value of the second coefficient, that is, to limit the second coefficient that exceeds a limit value, and the third coefficient is obtained, thereby effectively avoiding inappropriate coefficients. In addition, those skilled in the art should also know that specific configurations and parameters of the two low-pass filters may be selected and set differently, so that the two can cooperate with each other to perform filtering based on different characteristics of coefficients. For example, the first low-pass filter is configured as a coarse filter, while the second low-pass filter is configured as a fine filter. For another example, the first low-pass filter is designed as a first-order low-pass filter, which is used to filter out spikes of the first coefficient. The second low-pass filter is also designed as a first-order low-pass filter, which is used to perform low-pass filtering processing on the third coefficient. Therefore, the above technical solutions can achieve a smooth and stable filtering effect, and can achieve the purpose of the disclosure.

Specifically, the self-updating system of the disclosure may be configured to observe and update a wheel speed conversion coefficient of the vehicle. In other words, the self-updating system 1 is configured for self-updating of the wheel speed conversion coefficient of the vehicle, the wheel speed conversion coefficient represents a conversion relationship between a motor speed and a wheel speed, the first coefficient is also able to be self-updated based on the motor speed and the wheel speed, and the fourth coefficient is used for active damping control of the vehicle.

As can be learned from the Background Art section, self-updating of the wheel speed conversion coefficient is imperative but has not been reported so far. Therefore, this technical solution can be applied in this field in a targeted manner. Those skilled in the art should know that the motor described herein is a drive motor used in electric vehicles. The drive motor drives a shaft on which it is located, and then the shaft drives connected wheels to implement the driving of the vehicle. Here, the wheel speed may be an average value of speeds of coaxial left and right wheels, and may be obtained, for example, by using a sensor or controller of the vehicle. Those skilled in the art know that other parameters mentioned herein may also be obtained in the same or similar manner, and will not be described again. The calculation or self-updating of the first coefficient is implemented based on both the motor speed and the wheel speed, which are also used as a basis for subsequent filtering of the fourth coefficient. The fourth coefficient subjected to filtering by the system is finally used for active damping control of the vehicle.

As mentioned above, for each vehicle, software upgrades and hardware changes may change a conversion relationship between a wheel speed signal and a motor speed signal, which may have a negative impact on active damping control. Therefore, this technical solution uses the motor speed and the wheel speed as the basis for the calculation and update of the first coefficient, and can adaptively adjust the wheel speed conversion coefficient in real time and dynamically based on the characteristics of each vehicle, thereby improving the effectiveness of active damping control of the vehicle.

In order to update the first coefficient more adaptively, in some embodiments of the disclosure, the self-updating system 1 further includes a coefficient calculation module 14 and a working condition determining module 15, the working condition determining module 15 determines, based on an actual motor torque, the motor speed, the wheel speed, or the first coefficient, whether a current driving condition of the vehicle is valid, and outputs a determining result to the coefficient calculation module 14. When the current driving condition is valid, the coefficient calculation module 14 updates the first coefficient based on the motor speed and the wheel speed, or when the current driving condition is invalid, the coefficient calculation module 14 updates the first coefficient with the fourth coefficient.

It can be seen that this technical solution uses the working condition determining module and the calculation module to update the first coefficient in different manners based on different driving conditions. The driving conditions (or driving environment) may be working conditions of the vehicle during traveling, road conditions, current climate, and other surrounding environmental conditions of the vehicle during traveling, such as starting, stopping, no-load, full-load, uphill, downhill, low-speed, high-speed, constant-speed, acceleration, idling, braking, a vehicle speed, a vehicle acceleration, etc. The design of this technical solution considers that different driving conditions may represent or cause adverse effects on the calculation of the wheel speed conversion coefficient. Therefore, classified discussions may be conducted in a targeted manner. Since the wheel speed conversion coefficient is used for representing the conversion relationship between the motor speed and the wheel speed, the coefficient calculation module is designed, which updates the first coefficient based on the motor speed and the wheel speed. It should be noted that the various parameters mentioned herein, such as the actual motor torque, the motor speed, and the wheel speed here, can not only represent themselves, but also cover other parameters calculated by using these parameters as intermediate quantities, for example, a motor acceleration and a motor deceleration that can be obtained based on the motor speed, a wheel speed deceleration change amount that can be obtained based on the wheel speed, a change rate of the first coefficient that can be obtained based on the first coefficient, and other parameters.

Specifically, the working condition determining module 15 may determine, based on a motor deceleration, a motor acceleration, the motor speed, a wheel speed deceleration change amount, the wheel speed, an absolute value of an actual motor torque, and a change rate of the first coefficient, whether the current driving condition is valid, and update the first coefficient based on the classified discussion rules given in the above technical solution. A valid working condition flag may be outputted by identifying a valid working condition. For example, a value of 1 indicates valid, and a value of 0 indicates invalid. The motor deceleration and the motor acceleration are considered because the two may not fully represent an actual transmission relationship of the vehicle. The motor speed and the wheel speed deceleration change amount are considered for the reason of calculation accuracy. The wheel speed is considered for the reason that it is the denominator in the calculation, and since the wheel speed may be 0, the calculation is meaningless at this time. Therefore, this situation can be avoided. The absolute value of the actual motor torque is considered for the reason of rapid acceleration of the vehicle. At last, the change rate of the first coefficient is considered, so that the stability of the calculation process can be improved, and potential problems can be avoided. Specific application examples for these parameters are exemplarily shown in the following table.

| Invalid working condition | Threshold example |
|---|---|
| Motor deceleration ≤ Deceleration threshold | Deceleration threshold = -483 rpm/s |
| Motor acceleration > Acceleration threshold | Acceleration threshold = 600 rpm/s |
| Motor speed ≤ Minimum rotational speed | Minimum rotational speed = 395 rpm |
| Wheel speed deceleration change amount < Maximum deceleration change amount | Maximum deceleration change amount = -7.71 kph |
| Wheel speed ≤ Minimum wheel speed | Minimum wheel speed = 5 kph |
| Absolute value of the actual motor torque ≥ Maximum torque | Maximum torque = 200 Nm |
| Change rate of the first wheel speed conversion coefficient ≥ Maximum value of the change rate of the wheel speed conversion coefficient | Maximum value of the change rate of the wheel speed conversion coefficient = 0.025/s |

It should also be understood that the current driving condition can be considered as an invalid working condition provided that one of the above conditions is met, and therefore the fourth coefficient should be used for updating the first coefficient.

For the calculation of the first wheel speed conversion coefficient, similarly for illustrative purposes, the first coefficient is able to be updated by using the following formula:

$$\text{First coefficient} = \frac{\text{Motor speed} * 2 * \pi * \text{Resolution of a wheel speed signal}}{60 * \text{Wheel speed}}.$$

Those skilled in the art can select the units of the above parameters according to actual situations, and adaptively adjust the numbers in the formula when various units are selected differently. For example, in the above formula, the motor speed is in the unit of rpm and the wheel speed is in the unit of km/h. In addition, the resolution of the wheel speed signal depends on the transmission resolution of a bus (such as a CAN bus). The resolution of the wheel speed signal may be in the unit of (km/h)/bit. It should be understood that this formula may be considered as a theoretical value or initial value for the calculation of the wheel speed conversion coefficient, and may be preset or updated as needed when applying the various technical solutions of the disclosure.

FIG. 2 is a diagram of a filtering effect of a first low-pass filter according to the disclosure. The dashed line exemplarily represents a first wheel speed conversion coefficient, and the solid line exemplarily represents a second wheel speed conversion coefficient. It can be seen that the fluctuation amplitude of the second wheel speed conversion coefficient is smaller than that of the first wheel speed conversion coefficient. To this end, it is feasible that the filter coefficient of the first low-pass filter should be selected to filter out medium- and high-frequency jitter signals in the first wheel speed conversion coefficient, and should not have a high delay. In this embodiment, the filter coefficient is selected as 0.05. It should be understood that the filter coefficient is a general term. Those skilled in the art can specifically set the parameters of a corresponding low-pass filter, for example, set a first-order low-pass filter cut-off frequency or a second-order low-pass filter cut-off frequency and its damping coefficient, and the like according to actual requirements.

As mentioned before, the purpose of the hysteresis controller is to impose over-limit limits on the observed parameter, thereby preventing the calculated wheel speed conversion coefficient from deviating too much from the theoretical value. Herein, exemplarily, the hysteresis controller 12 determines, based on a hysteresis upper limit value, a hysteresis lower limit value, and a theoretical value of the second coefficient, whether it is necessary to perform hysteresis control on the second coefficient, and if necessary, the hysteresis controller 12 sets a hysteresis start flag to 1, otherwise it sets the flag to 0, and outputs the third coefficient accordingly. The theoretical value is mainly related to the transmission ratio, the dynamic rolling radius of the tire, and the signal factor (that is, the resolution of the wheel speed signal, which depends on bus transmission). The hysteresis upper limit value and the hysteresis lower limit value may be calibrated according to actual effects.

Those skilled in the art can select the hysteresis upper limit value and the hysteresis lower limit value according to actual requirements or application conditions, and decide, based on the above various parameters, whether hysteresis control is required. It should also be clear that when the hysteresis start flag is 1, it means that the hysteresis controller plays its over-limit limiting role at this time, and when the hysteresis start flag is 0, it means that the hysteresis controller does not play its over-limit limiting role at this time. Depending on different hysteresis start flags, the third coefficient is outputted in different manners accordingly. Specifically, the hysteresis controller 12 may be configured to: if the hysteresis start flag is 1, assign the third coefficient as a value to a third coefficient in a previous nth period, and if the hysteresis start flag in a next period is still 1, maintain the third coefficient; or if the hysteresis start flag is 0, assign the third coefficient as a value to the second coefficient, where n is a positive integer. An initial value of the third (wheel speed conversion) coefficient in the previous nth period is read from a memory (such as an EEPROM) that is to be described below. Exemplarily, n needs to be set to a value that can keep the third wheel speed conversion coefficient away from a limit value. In this embodiment, n = 20, a period for execution each time is 1 ms, the hysteresis upper limit value is equal to 0.01, the hysteresis lower limit value is equal to 0.007, and the theoretical value is equal to 0.46. It should be understood that each period refers to a process in which the hysteresis controller receives an input and completes an output. An execution time of the period depends on active damping control.

For how to determine whether hysteresis control needs to be performed on the second coefficient, that is, how to determine when the hysteresis start flag should be set to 0 or 1, in some embodiments of the disclosure, when the self-updating system 1 is started (or powered on), the initial value of the hysteresis start flag is 1, and the hysteresis controller 12 is configured to:

maintain the hysteresis start flag at 1 when an absolute value of a difference between the second coefficient and the theoretical value is greater than the hysteresis upper limit value, otherwise, further
set the hysteresis start flag to 0 when the absolute value of the difference between the second coefficient and the theoretical value is less than the hysteresis lower limit value, otherwise, still further
maintain the hysteresis start flag at 1 when the absolute value of the difference between the second coefficient and the theoretical value is greater than the hysteresis lower limit value and the hysteresis start flag is 1, otherwise set the hysteresis start flag to 0.

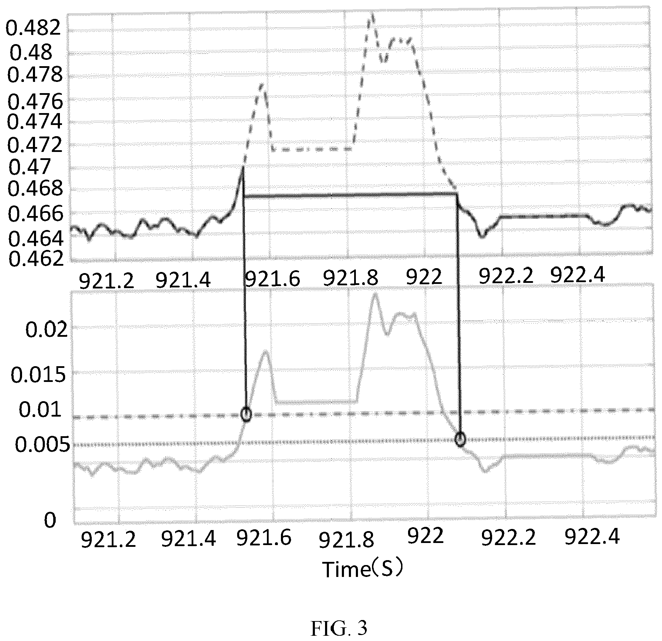

The above process may be better understood with reference to FIG. 3 (which is a diagram of a hysteresis control effect of a hysteresis controller according to the disclosure). It can be seen that such a hysteresis controller does not simply perform value assignment control only when the quantity to be observed exceeds the upper limit value or is lower than the lower limit value, and perform no control if the quantity is between the upper limit value and the lower limit value, but has a function similar to a "hysteresis" process, hence the name. In the upper part of FIG. 3, the dashed line represents the second wheel speed conversion coefficient, and the solid line represents a third wheel speed conversion coefficient. In the lower part of FIG. 3, the dashed line with larger intervals represents the hysteresis upper limit value, the dotted line with smaller intervals represents the hysteresis lower limit value, and the solid line represents the absolute value of the difference between the second (wheel speed conversion) coefficient and the theoretical value. In addition, in the lower part, two small circles are respectively used to mark the time points when the hysteresis is started and stopped, and correspond to the markings in the upper part. From this, when to start or stop the hysteresis and changes in the relationship between the second wheel speed conversion coefficient and the third wheel speed conversion coefficient can be intuitively seen. Through this technical solution, the inputted second wheel speed conversion coefficient is limited from exceeding the upper limit value by using the hysteresis effect, avoiding excessively high conversion coefficients, and ensuring that the outputted third wheel speed conversion coefficient has relatively high stability, especially when the observed absolute value frequently exceeds and falls below the hysteresis upper limit value, and due to the existence of the hysteresis effect, there will be no frequent switching of the third wheel speed conversion coefficient between a new value assigned and the original value.

Returning to FIG. 1, it can also be seen that the self-updating system 1 further includes a write-in determining module 16 and a memory 17, the write-in determining module 16 is configured to write the fourth coefficient into the memory 17, and the first low-pass filter 11, the hysteresis controller 12, and the second low-pass filter 13 are able to read the fourth coefficient stored in the memory 17.

It can be seen that the write-in determining module can determine whether to write the fourth coefficient into the memory. It will not write in if the conditions are not met, and will write in only if the conditions are met, so as to avoid inappropriate values. The memory may be any form of component having a storage function, such as an EEPROM mentioned earlier or other forms of memory. The coefficient calculation module, the first low-pass filter, the hysteresis controller, and the second low-pass filter can read data in the memory when needed.

Specifically, if the memory 17 detects, after the self-updating system 1 is started, that a data value of the fourth coefficient is 0, the value is reset to a theoretical value of the fourth coefficient; and/or if the write-in determining module 16 detects that the fourth coefficient is less than 0, a turn-off write-in flag is set to 0, otherwise the flag is set to 1; and when the self-updating system 1 is turned off, if the turn-off write-in flag is 1, the write-in determining module 16 writes a current fourth coefficient into the memory 17.

The data value of the fourth coefficient is 0, which means that a calculation result is abnormal, so it can be assigned its theoretical value. Similarly, the theoretical value of the fourth coefficient is mainly related to the transmission ratio, the dynamic rolling radius of the tire, and the signal factor (that is, the resolution of the wheel speed signal, which depends on bus transmission). Still similarly, if the fourth coefficient is less than 0, it also means that the calculation result is abnormal. Therefore, the turn-off (or power-off) write-in flag is set to 0, which means that the fourth coefficient will not be written into the memory after the system is turned off, otherwise, the flag is set to 1. In contrast, if the turn-off write-in flag is 1, it means that the fourth coefficient will be written into the memory when the system is turned off, to facilitate subsequent on-demand calling.

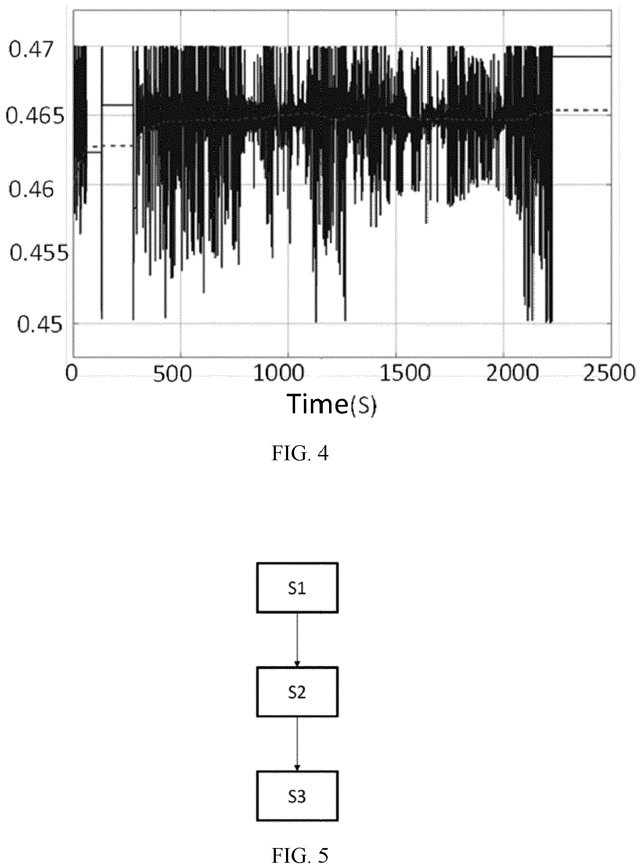

FIG. 4 is a diagram of a filtering effect of a second low-pass filter according to the disclosure.

The solid line represents the third wheel speed conversion coefficient, and the dashed line represents a fourth wheel speed conversion coefficient. It can be seen that, the stability of the fourth wheel speed conversion coefficient is greatly improved within a small value range compared to the third wheel speed conversion coefficient, which is conducive to subsequent active damping control. It is feasible that the second low-pass filter performs filtering on the third wheel speed conversion coefficient, the initial value of which is read from the memory, such as an EEPROM, and the initial value is the fourth wheel speed conversion coefficient read from the EEPROM when the power is on. The selection of the filter coefficient of the second low-pass filter should ensure that a change amount in the outputted fourth wheel speed conversion coefficient is minimal after stabilization. In this embodiment, the change amount should be controlled within 0.001, and the filter coefficient is set to 0.000015. Finally, the change amount of the fourth wheel speed conversion coefficient after stabilization is controlled within 0.001.

It should be noted that each low-pass filter can be discretized first according to its working principle, that is, a value in a previous period needs to be used. Considering that when the system is started (the vehicle is powered on) for the first time, there is no value in a previous period and only a current input can be obtained. Therefore, an initial value is required as the value of the previous period to complete discretization processing. Similarly, the hysteresis controller also uses the value in the previous nth period. This value is not available when the system is started, so the initial value is used instead. The initial value is an initial value of an input signal of the filter or hysteresis controller. Under this requirement, each low-pass filter or hysteresis controller can directly read the data in the memory, such as an EEPROM, as the initial value of its input when the system is started.

FIG. 5 is a flowchart of a self-updating method according to the disclosure.

According to another aspect of the disclosure, the disclosure also provides a self-updating method for coefficients having a fixed functional relationship, where the self-updating method is performed by the self-updating system 1 in any one of the above, and the self-updating method includes the following steps:

S1: inputting the first coefficient into the first low-pass filter 11, and obtaining the second coefficient;
S2: inputting the second coefficient into the hysteresis controller 12, and obtaining the third coefficient, the hysteresis controller 12 being configured to limit a value of the second coefficient; and
S3: inputting the third coefficient into the second low-pass filter 13, and obtaining the fourth coefficient, the fourth coefficient being able to be used to update the first coefficient, so as to be used in coefficient self-updating of the self-updating method.

For specific implementations of the method and technical effects that can be achieved, reference is made to the above descriptions of the self-updating system, and will not be repeated here.

It should be understood that the self-updating system of the disclosure may be installed on various vehicles, including cars, trucks, buses, hybrid vehicles, battery electric vehicles, etc. Therefore, the subject matter of the disclosure is also intended to protect various vehicles equipped with the self-updating system of the disclosure.

It should be understood that all of the above preferred embodiments are exemplary rather than limiting, and any modification or variation made by those skilled in the art to the specific embodiments described above without departing from the concept of the disclosure shall fall within the scope of legal protection of the disclosure.

**Claims**

1. A self-updating system (1) for coefficients having a fixed functional relationship, wherein the self-updating system (1) comprises:

   a first low-pass filter (11) whose input is a first coefficient and whose output is a second coefficient;
   a hysteresis controller (12) whose input is the second coefficient and whose output is a third coefficient, the hysteresis controller (12) being configured to limit a value of the second coefficient; and
   a second low-pass filter (13) whose input is the third coefficient and whose output is a fourth coefficient, the fourth coefficient being able to be used to update the first coefficient, so as to be used in coefficient self-updating of the self-updating system (1).

2. The self-updating system (1) according to claim 1, wherein the self-updating system (1) is configured for self-updating of a wheel speed conversion coefficient of a vehicle, the wheel speed conversion coefficient represents a conversion relationship between a motor speed and a wheel speed, the first coefficient is also able to be self-updated based on the motor speed and the wheel speed, and the fourth coefficient is used for active damping control of the vehicle.

3. The self-updating system (1) according to claim 2, wherein the self-updating system (1) further comprises a coefficient calculation module (14) and a working condition determining module (15), the working condition determining module (15) determines, based on an actual motor torque, the motor speed, the wheel speed, or the first coefficient, whether a current driving condition of the vehicle is valid, and outputs a determining result to the coefficient calculation module (14); and when the current driving condition is valid, the coefficient calculation module (14) updates the first coefficient based on the motor speed and the wheel speed, or when the current driving condition is invalid, the coefficient calculation module (14) updates the first coefficient with the fourth coefficient.

4. The self-updating system (1) according to claim 3, wherein the working condition determining module (15) determines, based on a motor deceleration, a motor acceleration, the motor speed, a wheel speed deceleration change amount, the wheel speed, an absolute value of an actual motor torque, and a change rate of the first coefficient, whether the current driving condition is valid.

5. The self-updating system (1) according to claim 2 or 3, wherein the first coefficient is able to be updated by using the following formula:

$$\text{First coefficient} = \frac{\text{Motor speed}*2*\pi*\text{Resolution of a wheel speed signal}}{60*\text{Wheel speed}},$$

wherein the motor speed is in the unit of rpm, the wheel speed is in the unit of km/h, and the resolution of a wheel speed signal is in the unit of (km/h)/bit.

6. The self-updating system (1) according to claim 1, wherein the hysteresis controller (12) determines, based on a hysteresis upper limit value, a hysteresis lower limit value, and a theoretical value of the second coefficient, whether it is necessary to perform hysteresis control on the second coefficient, and if necessary, the hysteresis controller (12) sets a hysteresis start flag to 1, otherwise it sets the flag to 0, and outputs the third coefficient accordingly.

7. The self-updating system (1) according to claim 6, wherein when the self-updating system (1) is started, an initial value of the hysteresis start flag is 1, and the hysteresis controller (12) is configured to:
   maintain the hysteresis start flag at 1 when an absolute value of a difference between the second coefficient and the theoretical value is greater than the hysteresis upper limit value, otherwise, further
   set the hysteresis start flag to 0 when the absolute value of the difference between the second coefficient and the theoretical value is less than the hysteresis lower limit value, otherwise, still further
   maintain the hysteresis start flag at 1 when the absolute value of the difference between the second coefficient and the theoretical value is greater than the hysteresis lower limit value and the hysteresis start flag is 1, otherwise set the hysteresis start flag to 0.

8. The self-updating system (1) according to claim 7, wherein the hysteresis controller (12) is configured to: if the hysteresis start flag is 1, assign the third coefficient as a value to a third coefficient in a previous $n^{\text{th}}$ period, and if the hysteresis start flag in a next period is still 1, maintain the third coefficient; or if the hysteresis start flag is 0, assign the third coefficient as a value to the second coefficient, wherein n is a positive integer.

9. The self-updating system (1) according to claim 1, wherein the self-updating system (1) further comprises a write-in determining module (16) and a memory (17), the write-in determining module (16) is configured to write the fourth coefficient into the memory (17), and the first low-pass filter (11), the hysteresis controller (12), and the second low-pass filter (13) are able to read the fourth coefficient stored in the memory (17).

10. The self-updating system (1) according to claim 9, wherein if the memory (17) detects, after the self-updating system (1) is started, that a data value of the fourth coefficient is 0, the value is reset to a theoretical value of the fourth coefficient; and/or
if the write-in determining module (16) detects that the fourth coefficient is less than 0, a turn-off write-in flag is set to 0, otherwise the flag is set to 1; and when the self-updating system (1) is turned off, if the turn-off write-in flag is 1, the write-in determining module (16) writes a current fourth coefficient into the memory (17).

11. A vehicle, having a self-updating system (1) according to any one of claims 1 to 10.

12. A self-updating method for coefficients having a fixed functional relationship, wherein the self-updating method is performed by using a self-updating system (1) according to any one of claims 1 to 10, and the self-updating method comprises the following steps:

S1: inputting the first coefficient into the first low-pass filter (11), and obtaining the second coefficient;
S2: inputting the second coefficient into the hysteresis controller (12), and obtaining the third coefficient, the hysteresis controller (12) being configured to limit a value of the second coefficient; and
S3: inputting the third coefficient into the second low-pass filter (13), and obtaining the fourth coefficient, the fourth coefficient being able to be used to update the first coefficient, so as to be used in coefficient self-updating of the self-updating method.

FIG. 1

Time(S)

FIG. 2

FIG. 3

FIG. 4

FIG. 5